# DEMANDE DE BREVET EUROPEEN

(11) **EP 2 568 546 A2**
(43) Date de publication de la demande: **13.03.2013**
(21) Numéro de dépôt: 12184116.7
(22) Date de dépôt: 12.09.2012
(51) Int. Cl.: H01S 3/067, H01S 3/094, H01S 3/10, H01S 3/102, H01S 3/23

(54) **Laser ou amplificateur à fibre optique apte à controler les variations de puissance optique en fonction de la température de façon passive**

(30) Priorité: 12.09.2011 FR 1158098
(71) Demandeur: KEOPSYS, 22300 Lannion (FR)
(72) Inventeur: Le Flohic, Marc, 22560 Pleumeur Bodou (FR)
(74) Mandataire: Ermeneux, Bertrand

(57) **Abrégé**

L'invention concerne un système optique de type laser ou amplificateur à fibre.

Selon l'invention, un tel système optique comprend des moyens de contrôle passif des variations de la puissance optique dudit système en fonction de la température.

## Description

### 1. Domaine de l'invention

Le domaine de l'invention est celui des lasers et des amplificateurs optiques.

Plus précisément, l'invention concerne un système optique de type laser ou amplificateur optique dont la puissance de sortie est contrôlée.

L'invention s'applique notamment mais non exclusivement à des lasers en régime continu ou en régime à impulsions, tels qu'en particulier des lasers à cavité possédant un milieu de gain pouvant être, par exemple, une fibre dopée entouré par deux réflecteurs, et des lasers de type MOPA (acronyme de "master oscillator power amplifier" en anglais), encore appelés "oscillateur amplifiés". Elle peut également s'appliquer aux amplificateurs à fibre optique.

### 2. Etat de la technique

Il est connu que la puissance optique continue ou moyenne et l'énergie émises par des lasers et des amplificateurs à fibre peuvent présenter une sensibilité importante en température.

On peut ainsi constater une variation de 40% de la puissance ou l'énergie d'un laser sur une plage de température de 100°C, sans disposition pour compenser l'effet de la température.

Les variations de puissance des lasers ou des amplificateurs à fibre sont notamment liées à la sensibilité en température des éléments constitutifs suivants :
- les diodes de pompage généralement de type semi-conducteur, qui apportent l'énergie au laser à fibre, dont l'efficacité et donc la puissance optique des diodes sont plus importantes à basse température ;
- la fibre optique dopée, dont le gain diminue avec la température, du fait d'une perte d'efficacité de transfert entre la lumière du laser de 'pompe' et la lumière émise par la fibre dopée lorsque la température augmente ;
- les diodes de 'pompe' dont la longueur d'onde varie typiquement de 0,3 nm/°C. En effet, lorsque la longueur d'onde de la lumière émise par les diodes de 'pompe' varie sous l'effet de la température, cette dernière est absorbée de façon moins efficace par la fibre dopée ce qui réduit l'efficacité du laser ou de l'amplificateur. On constate notamment une perte d'efficacité critique pour les diodes de type multi-mode, fibrées sur des fibres multi-modes de 105 micromètres de diamètre environ ;
- dans le cas des oscillateurs amplifiés, la diode signal, en général semiconductrice, dont la puissance et la longueur d'onde varient en fonction de la température, induisant respectivement des variations de gain net importantes dans l'amplificateur à fibre et des variations de puissance dans le système amplifié étant donné que le gain de l'amplificateur optique varie en fonction de la longueur d'onde ;
- les composants passifs fibrés, dont la transmission varie en fonction de la température de façon plus ou moins importante selon le grade ou la qualité choisie.

Afin de remédier à ce problème, il est connu de mettre en oeuvre des techniques de contrôle actif de la puissance.

On connait par exemple une technique de stabilisation des longueurs d'onde d'émission des diodes de 'pompe' et de signal dans le cas d'une architecture de type MOPA (oscillateur amplifié), consistant à maintenir la température constante de la diode avec un élément Peltier par exemple.

On a en également proposé de refroidir des fibres dopées pour maintenir leur température et donc leur gain constants.

Un inconvénient de ces techniques de refroidissement connues est qu'elles sont consommatrices d'énergie.

Un autre inconvénient de ces techniques de refroidissement connues est que leur mise en oeuvre peut être complexe et/ou onéreuse.

On a également pensé à mettre en oeuvre des systèmes de régulation électronique ajustant les puissances des pompes, par exemple en agissant sur le courant d'alimentation de ces lasers, en fonction de la puissance détectée en sortie de laser ou d'amplificateur à fibre à l'aide d'un photo-détecteur, de façon à conserver constante la puissance continue ou moyenne.

Cette technique de régulation électronique connue augmente le coût du laser, est consommatrice en énergie et s'avère dans certains cas complexe à mettre en oeuvre.

On a également proposé de stabiliser les longueurs d'onde d'émission des diodes de 'pompe' et de signal des lasers de type MOPA, en utilisant un réseau de Bragg externe placé sur une fibre monomode en sortie de composant.

Un inconvénient de cette technique est qu'un réseau de Bragg peut se dilater et se contracter sous l'effet de la température, ce qui modifie ses performances.

Un inconvénient des réseaux de Bragg large bande est en outre que leur fabrication est délicate, et qu'ils sont donc coûteux.

On a encore pensé à utiliser des composants optiques passifs spécifiques dont la transmission est quasi-indépendante de la température.

Toutefois, l'offre de ces composants est réduite, et se limite souvent à des bandes spectrales étroites et à des niveaux de puissance peu modulables.

Par ailleurs, le coût de revient de ces composants passifs spécifiques est généralement important.

### 3. Objectifs de l'invention

L'invention a donc notamment pour objectif de pallier les inconvénients de l'état de la technique cités ci-dessus.

Plus précisément l'invention a pour objectif de proposer une technique simple à mettre en oeuvre de lasers et d'amplificateurs à fibre, dont le niveau de puissance de sortie est indépendant ou quasi-indépendant de la température.

En particulier, un objectif, dans au moins un mode de réalisation de l'invention, est de fournir une technique de laser ou d'amplificateur à fibre ne présentant pas de circuit de contrôle électronique destinés à maintenir la puissance et/ou la température de certains composants constantes.

Un autre objectif de l'invention est de fournir une telle technique qui soit d'un coût de revient réduit.

Un autre objectif de l'invention est de fournir une telle technique permettant de limiter le nombre de tests de contrôle en production, et notamment de ne nécessiter qu'une mesure ou un nombre réduit de mesures de puissance ou d'énergie en fonction de la température de sorte à garantir les spécifications du laser ou de l'amplificateur sur toute la gamme de température.

Encore un objectif de l'invention est de fournir une technique de lasers ou amplificateurs à fibre qui soit économe en consommation électrique quelle que soit la température de fonctionnement.

L'invention a également pour objectif de fournir une telle technique permettant d'assurer la sécurité oculaire du laser ou de l'amplificateur à fibre dans une gamme de température étendue, de façon à ne jamais dépasser un seuil de puissance ou d'énergie qui pourrait être dangereux pour l'oeil humain.

L'invention a encore pour objectif de fournir un telle technique permettant de spécifier un comportement de puissance ou d'énergie en fonction de la température, qui satisfasse un gabarit de puissance ou d'énergie, avec une limite haute et une limite basse, pouvant varier en fonction de la température selon les besoins d'utilisation.

Un objectif de l'invention, dans au moins un mode de réalisation de l'invention, est également de proposer une technique de laser ou d'amplificateur à fibre qui permette d'optimiser la consommation électrique de façon automatique en contrôlant la puissance de sortie.

Encore un objectif de l'invention est de fournir une telle technique qui soit fiable.

### 4. Exposé de l'invention

Ces objectifs, ainsi que d'autres qui apparaitront par la suite sont atteints à l'aide d'un système optique de type laser ou amplificateur à fibre comprenant des moyens de contrôle passif des variations de la puissance optique dudit système en fonction de la température.

Ainsi, l'invention propose, de façon inédite et astucieuse, de mettre en oeuvre des moyens passif pour contrôler les variations de puissance optique d'un laser ou d'un amplificateur à fibre du fait d'un changement de température.

Dans au moins un mode de réalisation particulier de l'invention, lesdits moyens de contrôle passifs comprennent au moins une diode de pompe dont la longueur d'onde est sensiblement distincte d'un pic d'absorption d'une fibre dopée dudit système, et de préférence comprise entre 920 et 940 nm à 25°C et à courant d'utilisation lorsque ladite fibre dopée est une fibre dopée Erbium/Ytterbium.

Dans au moins un mode de réalisation particulier de l'invention, lesdits moyens de contrôle passif comprennent au moins deux lasers de pompe de longueur d'onde distincte et d'efficacité de pompage maximale pour des températures distinctes.

Dans au moins un mode de réalisation particulier de l'invention dans lequel ledit système comprend une diode signal non thermalisée, un préamplificateur et au moins un amplificateur à fibre dopée, les longueurs de fibre dopée dudit préamplificateur et desdits amplificateurs, formant lesdits moyens de contrôle passif, sont configurées, de sorte que la combinaison des gains dudit préamplificateur et desdits amplificateurs est sensiblement invariante dans une gamme de longueur d'onde correspond aux variation de longueur d'onde de ladite diode signal sur une plage de température prédéterminée.

De façon avantageuse, ledit système présentant au moins deux étages d'amplification, le dopant et/ou la concentration de dopage des fibres de chacun desdits étages d'amplification, est distinct de celui des autres étages d'amplification, afin d'assurer ledit contrôle passif des variations de la puissance optique dudit système en fonction de la température.

Selon un mode de réalisation particulier de l'invention, lesdits moyens de contrôle passif comprennent un système de couplage de la lumière d'une diode de pompe fibrée dans une fibre de sortie configuré en fonction de la température de sorte à permettre un contrôle de la puissance optique dudit système lorsque la température varie.

Dans au moins un mode de réalisation particulier de l'invention, lesdits moyens de contrôle passif comprennent un système de filtrage optique agissant sur des diodes de pompe non thermalisées et/ou sur une diode signal non thermalisée dudit système, configuré de sorte à présenter une atténuation spectrale permettant de compenser les variations de puissance de ladite ou desdites diodes en fonction de la température.

Dans au moins un mode de réalisation particulier de l'invention où ledit système comprenant une diode signal non thermalisée, lesdits moyens de contrôle passif comprennent au moins un filtre disposé entre deux étages d'amplification ou en sortie dudit système, configuré de sorte à atténuer la variation spectrale du gain d'amplification dudit système.

### 5. Description détaillée de l'invention

### 5.1. Rappels

Comme déjà évoqué, l'invention s'applique notamment aux lasers et aux amplificateurs optique, tel que des amplificateurs à fibre.

De façon connue en soi, ces lasers et ces amplificateurs comprennent classiquement :
- un préamplificateur à fibre permettant au signal d'être amplifié une première fois, pompé par une diode, de préférence non thermalisée dans le cadre de l'invention, et comprenant, le cas échéant, un réseau de Bragg de stabilisation de longueur d'onde sur la fibre de sortie ;
- un amplificateur de puissance destiné à amplifier un signal pré-amplifié, comprenant de préférence une fibre dopée à double gaine, et pompé avec une ou plusieurs diodes de type multi-modes non thermalisées et non stabilisées en longueur d'onde. Il peut par exemple s'agir d'un amplificateur de puissance comprenant des diodes de pompe utilisant la technologie "V-Groove Side-Pumping", ou une technique de couplage par l'intermédiaire d'un combinateur Pompe/signal fibré, et/ou dont le pompage peut être obtenu avec un laser à fibre pompé par une ou plusieurs diodes non thermalisées et non stabilisées en longueur d'onde ;
- le cas échéant, un ou plusieurs composants passifs, tels que des coupleurs de prélèvement ou des filtres, placés en entrée du préamplificateur, entre un préamplificateur et un amplificateur, ou en sortie d'un amplificateur.

Les lasers comprennent également une diode signal opérant en régime continu ou en régime impulsionnel, ou un laser à impulsion de type déclenché.

En outre de façon classique, de tels lasers et amplificateurs à fibre peuvent présenter une pluralité d'étages d'amplification.

### 5.2. Exemple de mode de réalisation de l'invention

Dans un premier exemple de réalisation de l'invention, on considère un amplificateur de puissance d'un laser de type MOPA.

Avantageusement la longueur d'onde des lasers de 'pompe' de cet amplificateur de puissance est choisie dans une zone spectrale où la fibre dopée de l'amplificateur ne possède pas de pic d'absorption prononcé.

Dans ce mode de réalisation de l'invention, les fibres étant co-dopées Erbium/Ytterbium, ce qui correspond à un pic d'absorption centré autour de 973 à 975 nm, les longueurs d'onde de pompe sont préférentiellement choisies entre 920 et 940 nm à 25°C et au courant d'utilisation, pour une température de fonctionnement s'étalant entre -35°C et + 65°C. En s'écartant ainsi du pic d'absorption, on obtient un laser de pompe dont l'absorption varie peu en cas de changement de température, et donc d'efficacité sensiblement homogène, ce qui confère à l'amplificateur une puissance de sortie sensiblement constante quelle que soit la température de fonctionnement.

Il convient de noter que plus la plage de température de fonctionnement est étendue, plus la plage des longueurs d'onde des pompes doit être étroite.

Dans une variante de ce mode de réalisation de l'invention, il peut être envisagé de mettre en oeuvre une pluralité de lasers de pompe au sein d'un amplificateur de puissance dont la longueur d'onde est choisie pour que leur efficacité de pompage se complète. Ainsi, par exemple, on associe à un premier laser de pompe émettant à 930 nm à 25°C et permettant d'avoir un pompage optimisé autour de -10°C, un deuxième laser de pompe décalé en longueur d'onde, émettant à 910 nm à 25°C, qui génère un pic d'efficacité de pompage à +40°C.

Ainsi entre -20° et 60°C, au moins un de ces deux lasers de pompe présente une efficacité convenable, ce qui permet de maintenir la puissance ou l'énergie de sortie de l'amplificateur sensiblement constante sur cette plage de température.

### 5.3. Autre exemple de mode de réalisation de l'invention

On considère un autre mode de réalisation d'un laser de type MOPA selon l'invention où les longueurs de fibre dopée du préamplificateur et des amplificateurs de puissance ont été avantageusement configurées, de sorte que la combinaison de leur gain permette de maintenir la valeur de la puissance ou de l'énergie de sortie du laser entre deux valeurs extrêmes prédéterminées sur une gamme de longueur d'onde coïncidant avec les variations de la longueur d'onde de la diode signal du laser en fonction des variations de la température de fonctionnement du laser.

### 5.4. Troisième exemple de mode de réalisation de l'invention

Dans un autre mode de réalisation de l'invention, des dopants différents et/ou des concentrations de dopage différentes sont mis en oeuvre à différents étage d'amplification d'un amplificateur d'un laser selon l'invention présentant en outre une diode signal non thermalisée en amont du préamplificateur, afin de décaler le pic de gain de chaque étage d'amplification en fonction de la longueur d'onde.

Dans ce mode de réalisation de l'invention, un préamplificateur dopé à l'erbium optimisé en longueur de fibre dopée et en concentration en dopant, est associé avec deux étages d'amplification utilisant de la fibre co-dopée Erbium/Ytterbium, de façon à contrôler l'évolution de la puissance ou de l'énergie de sortie du laser.

### 5.5. Quatrième exemple de mode de réalisation de l'invention

On présente ci-après une autre mode de réalisation d'un amplificateur de puissance selon l'invention.

Cet amplificateur présente un système de filtrage optique agissant sur des diodes de pompe non thermalisées, configuré de sorte que son atténuation spectrale permette de compenser, ou tout du moins de lisser en grande partie les variations de puissance de la pompe en fonction de la température, et d'obtenir une puissance de sortie sensiblement constante.

Ce filtre présente notamment une atténuation plus élevée, pour les longueurs d'onde où la puissance de la diode est importante, et une atténuation réduite sur une plage de longueurs d'onde où la puissance délivrée par la diode diminue.

### 5.6. Cinquième exemple de mode de réalisation de l'invention

On décrit ici un autre exemple de mode de réalisation de l'invention mis en oeuvre sur un laser comprenant une diode de pompe fibrée.

Dans ce laser, on a prévu un système de couplage de la lumière de la diode dans la fibre de sortie, sensible aux variations de température. La variation du taux de couplage en fonction de la température permet de compenser les variations de puissance de la diode en fonction de la température. Ainsi, à des températures basses où l'efficacité de la diode et donc sa puissance sont maximales, le couplage dans la fibre provoque une atténuation plus importante de la lumière transitant dans la fibre. À des températures élevées, où la diode possède une efficacité et une puissance plus modeste, l'atténuation fournit par le système de couplage est réduite. Ce couplage permet donc d'adapter la puissance de diodes de pompe fibrées non thermalisées en fonction de la température.

Il convient de noter qu'un système de couplage tel que décrit ci-dessus peut être mis en oeuvre au sein d'un amplificateur à fibre pour compenser l'effet de la température sur la puissance de sortie, dans un autre mode réalisation de l'invention.

### 5.7. Sixième exemple de mode de réalisation de l'invention

Un autre exemple de mise en oeuvre de l'invention au sein d'un laser de type 'oscillateur amplifié' (MOPA) pourvu d'une diode signal non thermalisée est illustré dans la suite de la description.

Dans ce mode de réalisation on a prévu un filtre optique configuré pour modifier la forme du gain total de l'amplificateur ou de la série d'amplificateurs à fibre montés après le signal. Ce filtre placé entre différents étages d'amplificateurs ou en sortie, est configuré pour atténuer plus fortement les gains importants et atténuer de façon moindre les gains plus faibles. On aplanit ainsi la réponse spectrale du ou des amplificateurs à fibre placés après le signal et/ou on définit une réponse spectrale particulière adaptée au gabarit de puissance ou d'énergie souhaité en fonction de la température. Cette compensation spectrale réalisée sur le signal d'un laser de type oscillateur amplifié non thermalisé pour le signal et/ou pour ses pompes, permet de compenser les variations de puissance ou d'énergie en sortie de laser.

Dans une variante de ce mode de réalisation de l'invention, il peut également être envisagé d'agir sur les variations de la lumière émise par une diode de pompe, indépendamment du signal non thermalisé.

## Revendications

1. Système optique de type laser ou amplificateur à fibre **caractérisé en ce qu'il** comprend des moyens de contrôle passif des variations de la puissance optique dudit système en fonction de la température.

2. Système optique selon la revendication 1, **caractérisé en ce que** lesdits moyens de contrôle passifs comprennent au moins une diode de pompe dont la longueur d'onde est sensiblement distincte d'un pic d'absorption d'une fibre dopée dudit système, et de préférence comprise entre 920 et 940 nm à 25°C et à courant d'utilisation lorsque ladite fibre dopée est une fibre dopée Erbium/Ytterbium.

3. Système optique selon l'une quelconque des revendications 1 et 2, **caractérisé en ce que** lesdits moyens de contrôle passif comprennent au moins deux lasers de pompe de longueur d'onde distincte et d'efficacité de pompage maximale pour des températures distinctes.

4. Système optique selon l'une quelconque des revendications 1 à 3, **caractérisé en ce qu'il** comprend une diode signal non thermalisée, un préamplificateur et au moins un amplificateur à fibre dopée, et **en ce que** les longueurs de fibre dopée dudit préamplificateur et desdits amplificateurs, formant lesdits moyens de contrôle passif, sont configurées, de sorte que la combinaison des gains dudit préamplificateur et desdits amplificateurs est sensiblement invariante dans une gamme de longueur d'onde correspond aux variation de longueur d'onde de ladite diode signal sur une plage de température prédéterminée.

5. Système optique selon l'une quelconque des revendications 1 à 4, **caractérisé en ce que,** ledit système présentant au moins deux étages d'amplification, le dopant et/ou la concentration de dopage des fibres de chacun desdits étages d'amplification, est distinct de celui des autres étages d'amplification, afin d'assurer ledit contrôle passif des variations de la puissance optique dudit système en fonction de la température.

6. Système optique selon l'une quelconque des revendications 1 à 5, **caractérisé en ce que** lesdits moyens de contrôle passif comprennent un système de couplage de la lumière d'une diode de pompe fibrée dans une fibre de sortie configuré en fonction de la température de sorte à permettre un contrôle de la puissance optique dudit système lorsque la température varie.

7. Système optique selon l'une quelconque des revendications 1 à 6, **caractérisé en ce que** lesdits moyens de contrôle passif comprennent un système de filtrage optique agissant sur des diodes de pompe non thermalisées et/ou sur une diode signal non thermalisée dudit système, configuré de sorte à présenter une atténuation spectrale permettant de compenser les variations de puissance de ladite ou desdites diodes en fonction de la température.

8. Système optique selon l'une quelconque des revendications 1 à 6, **caractérisé en ce,** ledit système comprenant une diode signal non thermalisée, lesdits moyens de contrôle passif comprennent au moins un filtre disposé entre deux étages d'amplification ou en sortie dudit système, configuré de sorte à atténuer la variation spectrale du gain d'amplification dudit système.
